# EUROPÄISCHE PATENTSCHRIFT

(11) **EP 2 400 275 B1**
(45) Veröffentlichungstag und Bekanntmachung des Hinweises auf die Patenterteilung: **08.12.2021**
(21) Anmeldenummer: 11169037.6
(22) Anmeldetag: 08.06.2011
(51) Int. Cl.: G01F 23/26

(54) **BERÜHRUNGSLOSE FÜLLSTANDSMESSUNG VON FLÜSSIGKEITEN**
CONTACTLESS FILL LEVEL MEASUREMENT OF LIQUIDS
MESURE DU NIVEAU DE REMPLISSAGE DE LIQUIDES SANS CONTACT

(30) Priorität: 25.06.2010 DE 102010025118
(43) Veröffentlichungstag der Anmeldung: 28.12.2011
(73) Patentinhaber: Siemens Healthcare Diagnostics Products GmbH, 35041 Marburg (DE)
(72) Erfinder: Wiedekind-Klein, Alexander, 61449 Steinbach (DE)

(56) Entgegenhaltungen:
- EP-A2- 1 961 575
- DE-A1-102007 001 175
- JP-A- H07 128 114
- US-A- 4 295 370
- US-A- 4 749 988
- US-A1- 2001 037 680
- US-A1- 2003 000 303
- US-A1- 2010 126 268

## Beschreibung

Die vorliegende Erfindung bezieht sich auf ein Verfahren zur nicht-invasiven, berührungslosen kapazitiven Füllstandsmessung.

Bei Füllstandsmessungen wird der Füllstand (die Standhöhe) von Flüssigkeiten und Schüttgütern in einem Behälter mittels Füllstandsmessgeräten erfasst.

Bei einer klassischen Füllstandsmessmethode wird ein Schwimmer mit einem Schwimmkörper in ein Gefäß mit einer Flüssigkeit eingebracht. Dieser Schwimmer enthält beispielsweise einen Magneten, dessen Feld durch die Gefäßwand Magnetrelais betätigt, welche als Array angeordnet sind. Dadurch ist der Füllstand im Gefäß messbar. Problematisch ist hierbei, dass je nach Dichte der Flüssigkeit der Schwimmkörper verschieden weit eintaucht, was das Messergebnis verfälscht. Auch kommt bei diesen Vorrichtungen der Schwimmer zwangsläufig mit der Flüssigkeit in Kontakt, was zur Folge haben kann, dass diese verunreinigt wird oder dass der Schwimmer -je nach Eigenschaft der Flüssigkeit- von dieser in Mitleidenschaft gezogen wird.

Weitere bekannte Methoden zur Füllstandsmessung umfassen die Leitfähigkeitsmessung, Druckmessung, Messung mit Ultraschall (bei welcher die Füllhöhe durch die Signallaufzeit ermittelt wird), Gewichtsmessung des Behälters, Differenzdruckmessung, optische Messung oder Kapazitätsmessung.

Bei der kapazitiven Füllstandsmessung wird die gegenüber Gasen oder Luft unterschiedliche dielektrische Leitfähigkeit ε des Füllguts ausgenutzt.

Bei invasiven Methoden der kapazitiven Füllstandsmessung bilden eine im Inneren des Behälters befindliche Sonde und z.B. die elektrisch leitende Behälterwand einen elektrischen Kondensator. Befindet sich die Sonde in Luft, wird eine bestimmte niedrige Anfangskapazität gemessen. Wird der Behälter befüllt, so steigt mit zunehmender Bedeckung der Sonde die Kapazität des Kondensators. Eine Sondenelektronik wandelt die Kapazität in eine elektrische Impulsfolge um und verstärkt sie. Eine Auswerteelektronik berechnet aus der Impulsrate den Messwert. Die Kapazitätsänderung des Mediums wird zu einem dem Füllstand proportionalen Signal umgewandelt und ermöglicht die Anzeige des Füllstandes.

Diese Methode weist den Nachteil auf, dass die Sonde, genau wie der oben erwähnte Schwimmer, je nach Eigenschaft der Flüssigkeit von dieser in Mitleidenschaft gezogen werden kann. Ferner besteht, falls der Behälter Teil eines Systems ist, bei jedem Wechsel des Behälters die Gefahr, dass die Sonde mechanisch oder elektrisch beschädigt wird.

Weiterhin können kapazitive Sensoren auch bei Methoden zur nicht-invasiven kapazitiven Füllstandsmessung eingesetzt werden. Diese Methoden zeichnen sich dadurch aus, dass kein Teil des Füllstandssensors mit dem Füllmedium, dessen Füllhöhe ermittelt werden soll, in Berührung kommt.

Die aktive Fläche eines kapazitiven Sensors enthält Elektroden, mit deren Hilfe die dielektrischen Verhältnisse in der Umgebung wahrgenommen werden. Beispielsweise umfasst der Sensor zwei Elektroden, die gleichsam einem aufgeklapptem Plattenkondensator angeordnet sind. Zwischen diesen Elektroden wird ein hochfrequentes elektrisches Wechselfeld erzeugt. Dieses Feld durchdringt das zu messende Material zerstörungsfrei.

Die Kapazität des Kondensators hängt von der Permittivität des Füllmaterials ab. Der Begriff "Permittivität" (auch: dielektrische Leitfähigkeit, Formelzeichen: ε) gibt die Durchlässigkeit eines Materials für elektrische Felder an. Auch dem Vakuum ist eine Permittivität zugewiesen, da sich auch im Vakuum elektrische Felder einstellen oder elektromagnetische Felder ausbreiten können.

Die Permittivitätszahl (relative Permittivität) εᵣ = ε/ε0 ist das Verhältnis von ε zur elektrischen Feldkonstante ε0 (Permittivität des Vakuums). Die dimensionslose Größe εᵣ kennzeichnet die feldschwächenden Effekte der dielektrischen Polarisation innerhalb elektrisch isolierender Materialien und hängt eng mit der elektrischen Suszeptibilität χ zusammen. Die Bezeichnung "Dielektrizitätskonstante" für Permittivität gilt als veraltet und sollte nicht mehr verwendet werden.

Da die meisten Medien eine von Luft oder Vakuum verschiedene Permittivität besitzen, führt das Befüllen eines Gefäßes, an dem sich ein kapazitiver Füllstandssensor befindet, zu einem Anstieg der Kapazität zwischen den Elektroden.

Es wird also ausgenutzt, dass, sobald sich ein leitendes oder nicht-leitendes Objekt annähert, sich je nach Abstand und Material des Messobjekts die elektrische Kapazität der Messelektrode zur Umgebung oder zu einer Referenzelektrode ändert. Somit sind kapazitive Sensoren in der Lage, berührungsfrei - d.h. ohne direkten Kontakt - auf Annäherung eines Objekts mit einem elektrischen Schaltsignal zu reagieren. Da kapazitive Sensoren auf diese Weise auch durch nicht-metallische Trennwände hindurch detektieren können, eignen sie sich besonders zur Füllstandsüberwachung von Flüssigkeiten, Pasten oder Schüttgütern.

Zur Bestimmung der Kapazität eines Kondensators wird in der Regel der ohmsche Entladestrom zwischen einzelnen Elektroden des Kondensators gemessen. Dabei wird der Kondensator in Reihe mit einem Wechselstrom-Milliamperemeter an eine Wechselspannungsquelle geschaltet. Der dann fließende und vom Instrument angezeigte Strom I hängt vom kapazitiven Widerstand des Kondensators ab. Hierfür ist eine Messfrequenz so niedrig zu wählen, dass in beiden Medien der ohmsche Widerstand gegenüber dem kapazitiven Strom dominant ist.

Alternativ ist es möglich, die Zeit zu messen, in welcher die Spannung am Kondensator auf einen bestimmten Wert (beispielsweise 33 %) gefallen ist. Nach Ablauf dieser Zeit kann beispielsweise ein Zähler angesteuert werden, der ein Zählereignis produziert, oder es wird die abgelaufene Zeit als Messwert ausgegeben.

Zur nicht-invasiven, kapazitiven Füllstandsmessung wird dabei wie folgt vorgegangen: Befindet sich eine der Elektroden beispielsweise benachbart zu einem Medium mit geringer Permittivität, wie z.B. Luft, wird zunächst eine niedrige Anfangskapazität gemessen. Wird der Behälter mit einem Medium höherer Permittivität, wie z.B. Wasser, befüllt, so steigt mit zunehmendem Benachbarungsbereich der Kondensatorelektrode die Kapazität des Kondensators. Es kann dann wie oben beschrieben ein Messwert abgegriffen werden, der proportional zum Benachbarungsbereich der Kondensatorelektrode ist.

Ein Beispiel für einen kapazitiven Sensor, der für die Füllstandsmessung eingesetzt wird, ist der Sensor "CLC" (Capacitive Level Sensor) der Firma Sensortechnics (http://www.sensortechnics.com/download/DS_Standard-CLC_E_11663.pdf). Dieser Sensor verfügt über eine einzige Messelektrode und eine einzige Referenzelektrode und wird an der Außenseite einer Behälterwand befestigt.

Nachteilig bei diesem Sensor und anderen bekannten Verfahren und den dazu gehörigen Vorrichtungen ist jedoch die Empfindlichkeit für äußere Störeinflüsse, die das Messergebnis verfälschen können. Störende Einflüsse können z.B. von hochfrequenten Spannungsquellen, vom Bedienungspersonal oder anderen, räumlich eng benachbarten Flüssigkeitsbehältern mit variablem Füllstand ausgehen. Insbesondere in Laboren mit mehreren, räumlich eng benachbart angeordneten Apparaturen und automatischen Analysegeräten, bei denen hochfrequente Spannungsquellen eingesetzt werden, treten derartige äußere Störungen mit großer Wahrscheinlichkeit, relativ häufig und massiv auf. Ein solcher Sensor, der an einem (fast) leeren Behälter befestigt ist, zeigt z.B. fälschlicherweise an, dass der Behälter voll oder teilweise gefüllt ist, wenn ein Objekt, z.B. eine Hand oder ein Maschinenteil, in die Nähe der Messelektrode gerät.

Zudem sind Sensoren dieser Art auch für andere Einflüsse von außen anfällig. So bewirkt zum Beispiel ein Luftspalt zwischen Messfeld und Messbehälter eine Verringerung des Messsignals.

Wenn der Füllstandssensor Teil eines Systems ist, z.B. eines automatischen Analysegerätes für die Untersuchung von klinischen Patientenproben, kann diese Fehlmessung zu erheblichen Komplikationen im Ablauf von weiteren Arbeitsschritten führen.

Zudem hängt bei derartigen Sensoren die Messgenauigkeit sehr stark von einer korrekten Kalibrierung ab, wodurch es zu erheblichen Messfehlern kommen kann und die Benutzerfreundlichkeit stark eingeschränkt ist.

Daher wäre eine Vorrichtung, die weniger störanfällig für äußere Einflüsse ist, von großem Vorteil.

Zudem wäre eine Vorrichtung, deren Messqualität weniger von der Qualität der Kalibrierung abhängt, von großem Vorteil.

In EP 1312897 A2 ist ein anderer kapazitiver Füllstandssensor beschrieben. Dieser Sensor umfasst eine vertikale Anordnung von Metallplatten, wobei jeweils zwei Metallplatten einen Kondensator ausbilden.

Die JPH 07 128114 A, DE 10 2007 001175 A1, US 4 295 370 A und US 2003/000303 A1 beschreiben weitere nicht-invasive Füllstandsmessungen gemäß dem Stand der Technik.

Es ist eine Aufgabe der vorliegenden Erfindung, ein Verfahren zur berührungslosen kapazitiven Füllstandsmessung eines Füllmediums in einem Behälter bereitzustellen, welches die oben genannten Nachteile vermeidet und die insbesondere weniger störungsanfällig für Einflüsse von außen ist.

Die Aufgabe wird unter anderem dadurch gelöst, dass die Vorrichtung zur berührungslosen kapazitiven Füllstandsmessung eine besondere Anordnung von mindestens zwei Messlektroden und mindestens einer Referenzelektrode aufweist.

Die Erfindung betrifft daher ein Verfahren gemäß Patentanspruch 1 unter Verwendung einer Vorrichtung zur nicht-invasiven kapazitiven Füllstandsmessung.

Die zwischen den Messelektroden und der Referenzelektrode ausgebildeten elektrischen Felder können, sofern die Vorrichtung an einem Behälter angebracht ist, die Behälterwand zerstörungsfrei durchdringen und durch den Füllstand des Füllmediums messbar beeinflusst werden.

### KURZE BESCHREIBUNG DER ZEICHNUNGEN

Fig. 1 zeigt eine schematische Darstellung einer bevorzugten Ausführungsform einer das erfindungsgemäße Verfahren durchführenden Vorrichtung.
Fig. 2, 3 und 4 veranschaulichen, wie das erfindungsgemäße Verfahren Messfehler unterdrücken kann.

Der Begriff "elektrisches Feld" soll ein unsichtbares Kraftfeld, das durch sich gegenseitig anziehende und abstoßende elektrische Ladungen gebildet wird, bezeichnen. Die Einheit der elektrischen Feldstärke ist Volt pro Meter (V/m), und die Stärke eines elektrischen Feldes nimmt mit zunehmender Entfernung von der Quelle ab.

Die Kapazität des Kondensators hängt von der Permittivität des Stoffes zwischen den Platten ab. Daher ändert sich bei Annäherung bzw. Entfernung eines Objektes, welches eine andere Permittivität als der ursprünglich zwischen den Platten befindlichen Stoff besitzt, die Kapazität des Kondensators. Folglich werden die Elektroden beim Befüllen oder Leeren des Behälters durch das Füllmedium so beeinflusst, dass sich die Kapazität des Kondensators, den sie bilden, ändert.

Der Begriff "Füllmedium" soll den Stoff, dessen Füllstand ermittelt werden soll, bezeichnen. Vorzugsweise ist das Füllmedium eine Flüssigkeit, eine Paste oder ein Schüttgut.

Der Begriff "Behälter" soll ein Gefäß bezeichnen, in dem sich das zu vermessende Füllmedium befindet. Vorzugsweise handelt es sich bei dem Behälter um einen Kanister, eine Wanne oder Flasche.

Der Begriff "Messelektrode" soll eine Elektrode bezeichnen, die zusammen mit der Referenzelektrode jeweils einen Kondensator ausbildet. Die Gesamtfläche aller Messelektroden einer Vorrichtung definiert die Messfläche der Vorrichtung.

Der Begriff "Referenzelektrode" soll im Folgenden eine Elektrode bezeichnen, die zusammen mit einer oder mit mehreren oder mit allen Messelektroden jeweils einen Kondensator ausbildet. Zudem dient die Referenzelektrode auch als Bezugspunkt für die kontinuierliche Messung. Die zweidimensionale Ausdehnung der Referenzelektrode bzw. Gesamtfläche aller Referenzelektroden einer Vorrichtung definiert die Referenzfläche der Vorrichtung.

Die Vorrichtung weist mindestens zwei Referenzelektroden auf, die die Referenzfläche definieren. Die Referenzelektroden sind dann in unterschiedlichen horizontalen Ebenen angeordnet, so dass eine Referenzelektrode auf einer horizontalen Ebene mit einer Messelektrode auf derselben horizontalen Ebene jeweils einen Kondensator ausbildet.

Die Vorrichtung kann mindestens 3, bevorzugterweise mindestens 5, ganz besonders bevorzugt mindestens 10 Messelektroden aufweisen. Die Vorrichtung kann 3, 4, 5, 6, 7, 8, 9 oder 10 Messelektroden aufweisen, grundsätzlich ist jedoch jede Anzahl an Messelektroden ≥ 2 denkbar.

Die Referenz- und Messelektroden bestehen aus einem elektrisch leitfähigen, bevorzugt aus einem metallischen Material, beispielsweise aus einer Kupferfolie. Die Messelektroden können dieselbe oder unterschiedliche Größen und/oder Ausgestaltungen aufweisen. Grundsätzlich spielen die Ausgestaltung und die Dimensionen der Messelektroden keine Rolle. Sie können beispielsweise oval, kreisrund, quadratisch oder rechteckig ausgestaltet sein. Die Dimensionen hängen zweckmäßig mit der Größe des Behälters, in dem sich das Füllmedium befindet, dessen Füllstand bestimmt werden soll, zusammen.

Bevorzugterweise sind die Messelektroden jeweils rechteckig ausgestaltet mit einer Größe von 50 × 18 mm oder 35 × 12 mm.

Bevorzugterweise weisen die mindestens zwei Messelektroden unterschiedlich große Flächen auf. Dies hat den Vorteil, dass der Füllstand an unterschiedlichen Stellen des Behälters mit unterschiedlicher Genauigkeit gemessen werden kann. Wenn mit der berührungslosen kapazitiven Füllstandsmessung beispielsweise insbesondere der Restgehalt eines Füllmediums in einem Behälter bestimmt werden soll, könnte die Größe der Messelektroden zum Boden des Behälters hin abnehmen, um ein immer genaueres Messergebnis zu gewährleisten.

Die Dimension der Referenzfläche, die durch eine oder mehrere Referenzelektroden gebildet wird, ist so gewählt, dass sie in ihrer vertikalen Ausdehnung mindestens der vertikalen Ausdehnung der Messfläche, die durch die vertikale Anordnung der Messelektroden definiert ist, entspricht oder über sie hinaus geht.

Es wurde überraschenderweise gefunden, dass durch die Verwendung mehrerer Messelektroden, die zusammen mit einer Referenzelektrode jeweils einen Kondensator ausbilden, der störende Einfluss äußerer Störfaktoren vermindert und die oben genannten Messverfälschungen vermieden werden können. Die Vorrichtung ist nämlich so ausgestaltet, dass sie zur Bestimmung des Füllstandes die Kapazitäten von mindestens zwei Kondensatoren misst und zueinander in Beziehung setzt.

Bevorzugterweise umfasst die Vorrichtung ferner eine Auswerteeinrichtung. Diese setzt die Messwerte so zueinander in Beziehung, dass sich äußere Einflüsse auf alle Elektroden gleich auswirken, so dass das Messergebnis nur minimal beeinträchtigt wird. Dies geschieht beispielsweise durch eine Ratioermittlung und/oder eine Plausibilitätprüfung. Der Begriff "Auswerteeinrichtung" soll eine Einrichtung bezeichnen, die die Veränderung der Kapazität der elektrischen Felder misst und den Füllstand berechnet. Die Messung kann in Farad erfolgen. Alternativ kann es sich bei dem Messwert aber auch um andere Größen handeln, die als Maß für eine Kapazitätsänderung dienen.

Bevorzugterweise wird der sich durch die Messung der mindestens zwei Kapazitäten und anschließende Verrechnung erhaltene Messwert als einheitenloser Messwert dargestellt (z.B. in Prozent). Die Auswerteeinrichtung ermöglicht ferner die Validierung der Messwerte durch Vergleich mit gespeicherten Kalibrierungswerten und durch Vergleich der Messwerte untereinander.

Die Auswerteeinrichtung kann als separate Einrichtung vorliegen, sie kann aber auch Teil eines übergeordneten Steuersystems sein.

Bevorzugterweise weist die Auswerteeinrichtung einen Hauptprozessor (CPU) und/oder eine Speicherprogrammierbare Steuerung (SPS) auf.

Die Vorrichtung steht bevorzugterweise in Kontakt mit einem übergeordneten Steuersystem. Zur Herstellung einer Kommunikation mit einem übergeordneten Steuersystem weist die Vorrichtung bevorzugterweise eine serielle Schnittstelle (Serial Periphal Interface, z.B. RS-232 oder RS-485) als weitere Komponente auf. Ferner kann die Vorrichtung eine Spannungsquelle aufweisen. Das Vorhandensein dieser weiteren Komponenten hat den Vorteil, dass die Vorrichtung als eigenständiges Bauteil beliebig eingesetzt werden kann.

Bevorzugterweise ist die Vorrichtung Teil eines Analysesystems, z.B. eines automatischen Analysegerätes für die Untersuchung von klinischen Patientenproben, in dem andere Arbeitsgänge von dem Ergebnis der Füllstandsmessung abhängen. Das übergeordnete Steuersystem überwacht die einzelnen Abläufe im Analysegerät und stimmt sie aufeinander ab. In einer bevorzugten Ausführungsform ist die Auswerteeinrichtung der Vorrichtung Teil des übergeordneten Steuersystems.

Bevorzugterweise ist die Vorrichtung nicht direkt am Behälter angeordnet, sondern an einer Haltevorrichtung, die eine Positionierung der Vorrichtung zur Füllstandsmessung in festgelegtem Abstand zum Behälter ermöglicht. Dies ermöglicht, dass der Behälter problemlos, ohne die Gefahr einer Beschädigung der Auswertevorrichtung ausgetauscht werden kann.

Die Vorrichtung eignet sich zur berührungslosen Messung des Füllstands von verschiedensten Füllmedien, wie beispielsweise von Wasser, organischen Lösungsmitteln oder Schüttgütern, wie pulver- oder granulatförmigen Feststoffen. Grundsätzlich können jedoch alle möglichen Füllmedien verwendet werden, die eine Permittivität aufweisen, die sich von der Permittivität des Materials, das sich vor dem Einfüllen bzw. nach dem Entfernen des Füllmediums im Behälter befindet, so deutlich unterscheidet, dass die Änderung der Kapazität beim Befüllen des Behälters bzw. beim Entleeren des Behälters so deutlich ausfällt, dass die Auswerteeinrichtung den Füllstand ermitteln kann.

Die folgende Tabelle zeigt relative Permittivitäten einiger Stoffe bei 18 °C und einer Frequenz von 50 Hz.

**Tabelle 1: relative Permittivitäten einiger Stoffe bei 18 °C und einer Frequenz von 50 Hz.**

| **Medium** | ***εᵣ*** |
|---|---|
| Vakuum | 1 |
| Luft | 1,00059 |
| Ammoniak (0 °C) | 1,007 |
| Polypropylen (90 °C) | 2,1 |
| Paraffin | 2,2 |
| Benzol | 2,28 |
| Polyethylen (90 °C) | 2,4 |
| Trockenes Holz | 2 - 3,5 |
| Papier | 1-4 |
| Kaliumchlorid | 4, 94 |
| Glas | 6-8 |
| Propanol | 18,3 |
| Ethanol | 24,7 |
| Methanol | 32,6 |
| Glycerin | 42,5 |
| Wasser | 80,1 |
| Eis (-20 °C) | ≈ 100 |

Die Vorrichtung eignet sich zur berührungslosen Messung des Füllstands von Füllmedien in verschiedensten Behältern. Ein Behälter kann zumindest teilweise aus einem Material der Gruppe Glas, Kunststoff und Holz bestehen. Der Behälter kann ein beliebiges Volumen von zwischen etwa 500 mL und etwa 20 L aufweisen.

Bevorzugterweise ist der Behälter ein Bestandteil der Vorrichtung und die Referenzelektrode wird durch einen Teil der Behälterwand gebildet. In diesem Fall muss die Behälterwand zumindest in dem Bereich, der als Referenzfläche vorgesehen ist, zumindest teilweise elektrisch leitend sein.

Je nach Höhe des Behälters weisen die Messelektroden eine unterschiedliche große Fläche auf, oder es wird eine größere bzw. kleinere Anzahl von Messelektroden verwendet, um eine Messfläche bereit zu stellen, die die Füllstands-relevante Höhe des Behälters überdeckt.

Damit der Füllstand des Füllmediums korrekt bestimmt werden kann, werden mindestens zwei Kalibrierwerte, die durch Vermessung eines leeren und eines vollen Behälters ermittelt werden, benötigt.

Dadurch, dass die Messwerte der einzelnen Messelektroden nicht direkt zur Berechnung des Füllstands verwendet werden, sondern mit gespeicherten Kalibrierungswerten und untereinander verglichen werden, wirkt sich ein äußerer Einfluss, der die gesamte Vorrichtung betrifft, nur sehr gering auf die Füllstandsmessung aus, da der äußere Einfluss alle Elektroden gleichermaßen beeinträchtigt.

Beispielsweise kann ein Messwert, der durch einen lokalen Luftspalt zwischen Behälter und Vorrichtung an der betroffenen Messelektrode verfälscht wird, ausgeglichen werden. Zusätzlich wird die Robustheit der erfindungsgemäßen Füllstandsmessung gegen äußere Einflüsse vorzugsweise dadurch verstärkt, dass bei der Verwendung von mehr als zwei Messelektroden, eine Plausibilitätsprüfung durchgeführt werden kann, in der Daten von denjenigen Messelektroden, die offensichtlich einen fehlerhaften Messwert generieren, bei der Auswertung ignoriert werden.

Zudem ermöglicht die Verknüpfung der Elektroden untereinander die Durchführung eines aussagekräftigen Selbsttests der Vorrichtung, wodurch Fehlmessungen stark minimiert werden können.

In einer bevorzugten Ausführungsform werden die Kapazitäten der mindestens zwei Kondensatoren kontinuierlich gemessen. Der Begriff "kontinuierlich" soll im Folgenden eine stetige Messung bezeichnen, die entweder in analoger Weise durchgeführt wird, oder aber in digitaler Weise mit einer hohen Samplingrate (= "pseudokontinuierlich").

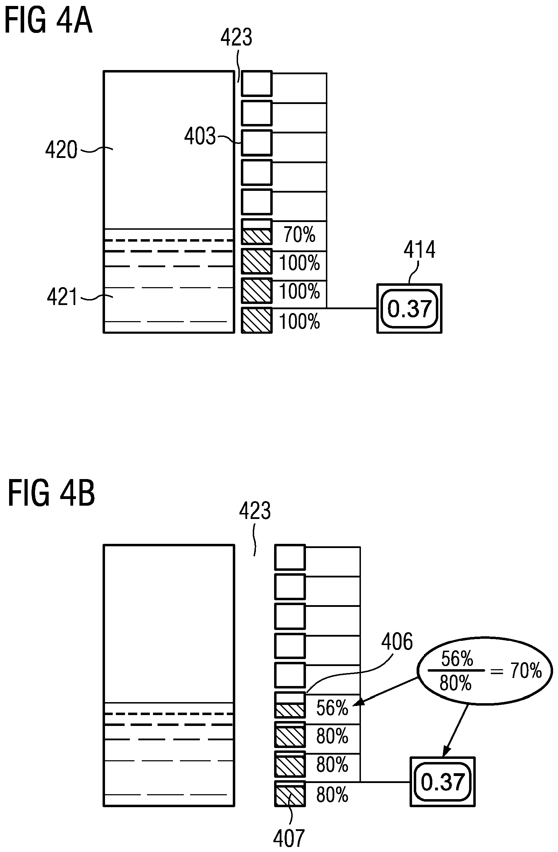

Erfindungsgemäß umfasst die Validierung der Messwerte eine Ratiomessung. Dabei werden die Messwerte der mindestens zwei Messelektroden untereinander verglichen und zueinander in Beziehung gesetzt. Maßgeblich für die Messung sind also nicht die einzelnen absoluten Rohwerte, sondern die relativen Werte, die sich durch den Vergleich mit weiteren Messwerten ergeben. Die sog. Ratiomessung ist in Fig. 4 dargestellt. Eine Vorrichtung mit 10 Messelektroden ist an einem Behälter angebracht. Der Füllstand des Füllemdiums im Behälter ist derart, dass die drei untersten Messelektroden vollständig, also zu 100 %, und die vierte Messelektrode von unten zu 70 % bedeckt sind. Damit sind 37 % der Messfläche bedeckt, es ergibt sich ein Füllstand von 37 % bzw. 0,37. Ist z.B. ein größerer Luftspalt zwischen Messelektroden und Behälter entstanden, so messen die Messelektroden geringere absolute Rohwerte. Anhand einer Messelektrode, die komplett bedeckt ist, wird ein Korrekturfaktor ermittelt, und alle Messwerte der anderen Messelektroden werden mit diesem Korrekturfaktor multipliziert. Auf diese Weise wird der Einfluss des Luftspalts eliminiert. Auf diese Weise kann auch der Einfluss von Füllmedien mit nicht-konstanten Dielektrizitätswerten minimiert werden, wenn z.B. die Eigenschaften des zu messenden Füllmediums nicht bekannt sind (unbekannte Flüssigkeitsgemische).

Die benötigten Kalibrierungswerte werden bevorzugt durch Vermessen eines Behälters einmal im leeren und einmal im mit dem entsprechenden Füllmedium befüllten Zustand ermittelt. Es ist jedoch auch möglich, dass zur Ermittlung der Kalibrierungswerte nicht derselbe Behälter einmal im vollen und einmal im leeren Zustand vermessen wird, sondern zwei baugleiche Behälter vermessen werden, von denen einer leer und einer voll ist. Bei keinem der für die Kalibrierung verwendeten Behälter muss es sich um den Behälter handeln, der das Füllmedium enthält, es muss jedoch ein genügend ähnlicher Behälter sein, damit der Füllstand mit den ermittelten Kalibrierdaten anschließend korrekt bestimmt werden kann.

Bevorzugterweise umfasst das erfindungsgemäße Verfahren ferner eine Plausibilitätsprüfung, wobei die einzelnen absoluten Messwerte der Messelektroden mittels einer logischen Auswertung überprüft werden. Ist, wie z.B. in Fig. 4 gezeigt, eine Vorrichtung mit 10 Messelektroden an einem Behälter angebracht, so ergibt der Vergleich des Messwerts der vierten Messelektrode von unten mit der dritten Messelektrode von unten, dass der Messwert der vierten Elektrode niedriger ist als der Messwert der dritten Elektrode. Ergäbe nun der Vergleich der fünften Messelektrode von unten mit der vierten Messelektrode von unten, dass der Messwert der fünften Elektrode höher wäre als der Messwert der vierten Elektrode, wäre dies unplausibel, da eine höher gelegene Messelektrode nicht stärker vom Füllmedium bedeckt sein kann als eine weiter unten gelegene Messelektrode. Die Auswerteeinrichtung erkennt also, dass einer der beiden Messwerte nicht plausibel und daher fehlerhaft sein muss. Durch den Vergleich mit den Messwerten weiterer Messelektroden und der logischen Auswertung der Messwerte kann eine fehlerhafte Messung, z.B. durch einen kurzzeitigen oder lokalen Störeinfluß (Luftspalt, Annäherung eines Objektes) erkannt und angezeigt werden.

Alternativ kann, wenn sich herausstellt, dass der Wert einer einzigen Messelektrode fehlerhaft ist und dass genügend andere, plausible Messwerte vorliegen, der fehlerhafte Messwert bei der Füllstandsmessung ignoriert werden.

### ZEICHNUNGEN

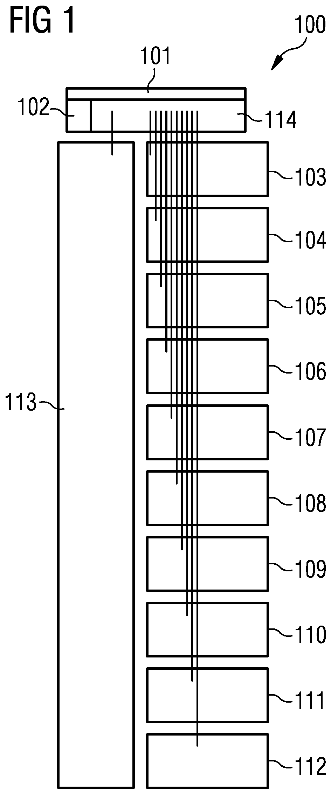

Fig. 1 zeigt eine schematische Darstellung einer Draufsicht auf eine Vorrichtung 100. Die Vorrichtung umfasst eine serielle Schnittstelle (Serial Peripheral Interface) 101, einen Spannungsregler 102, 10 Messelektroden (103 bis 112), eine Referenzelektrode 113 und eine Auswerteeinrichtung 114, hier eine CPU. Die Messelektroden sind jeweils mit der Referenzelektrode 113 verschaltet, so dass jede Messelektrode 103-112 zusammen mit der Referenzelektrode 113 jeweils einen Kondensator ausbildet. Folglich liegen die elektrischen Felder, deren Kapazitäten gemessen werden, jeweils zwischen einer Messelektrode und der Referenzelektrode 113 vor. Es gibt vorliegend insgesamt 10 elektrische Felder, deren Kapazitäten sich bedingt durch den Füllstand eines Füllmediums ändern können.

Neben der Ermittlung der Kapazitätsänderungen führt die Auswerteeinrichtung 114 während der Füllstandsmessung bevorzugt eine Plausibilitätsprüfung durch.

Die Ermittlung der Kapazitätsänderungen erfolgt beispielsweise, indem zunächst die Messdaten der einzelnen Messelektroden 103-112 verrechnet werden. Hier könnte sich zum Beispiel ergeben, dass die Messelektroden 112 bis 109 unterhalb des Füllstands liegen, wohingegen Messelektroden 107 bis 103 oberhalb des Füllstands liegen. Die Messelektrode 108 liegt genau auf der Höhe des Füllstands.

Bei der Plausibilitätsprüfung ermittelt die Auswerteeinrichtung, ob eine der Messelektroden ein nicht plausibles Messergebnis ausgibt. Dies könnte zum Beispiel passieren, wenn sich ein Objekt im elektrischen Feld der Messelektrode 104 befindet und eine Kapazität verursacht, die sich nicht mit dem Messergebnis der benachbarten Messelektroden 103 und 105 in Einklang bringen lässt. Das Messergebnis der benachbarten Messelektroden 103 und 105 stellt klar, dass alle drei Messelektroden 103, 104 und 105 oberhalb des Füllstands liegen und die Kapazität der Elektroden ähnlich sein sollte. Durch Berücksichtigen dieser Information kann die Auswerteeinrichtung korrekte von falschen Messergebnissen unterscheiden und den Füllstand richtig berechnen.

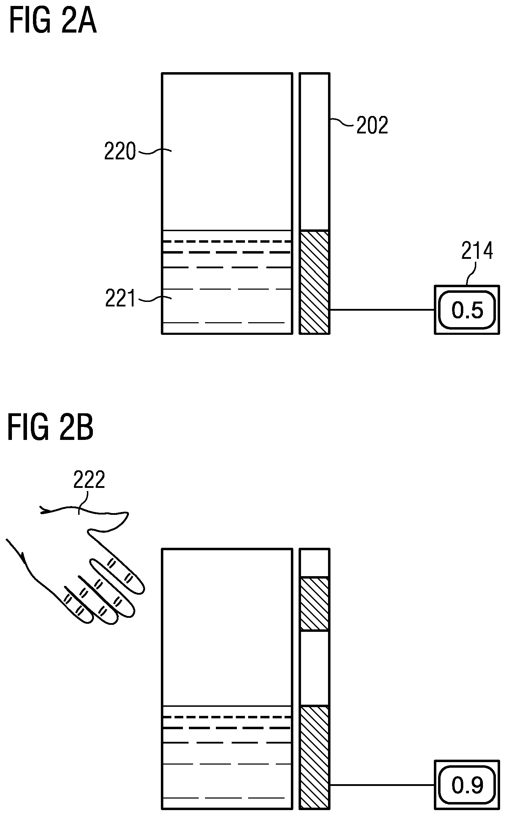

Fig. 2 zeigt den verfälschenden Einfluss einer äußeren Störung, beispielsweise durch die Nähe einer Laborperson, auf die Messung mit einer Vorrichtung aus dem Stand der Technik.

In Fig. 2A ist eine Messvorrichtung gezeigt, die aus einem Sensor 202, bestehend aus einer einzigen Messelektrode, und einer Referenzelektrode, besteht, der in der Nähe eines mit einer Flüssigkeit 221 teilgefüllten Behälters 220 angeordnet ist. Da der Behälter 220 zuvor mit Luft gefüllt war, ändern sich durch Einfüllen der Flüssigkeit 221 die dielektrischen Eigenschaften der unmittelbaren Umgebung des Sensors, was sich in einer geänderten Kapazität und damit z.B. in einer geänderten Entladungszeit äußert. In der Auswerteeinrichtung 214 wird ein Messwert ermittelt und angezeigt.

Fig. 2B zeigt den störenden Einfluss der Nähe der Hand 222 einer Laborperson. Hierdurch ändern sich in einem nicht flüssigkeitsgefüllten Bereich des Behälters 220 ebenfalls die dielektrischen Eigenschaften des Mediums, und der Messwert in der Auswerteeinrichtung 214 wird verfälscht. Ebenso kann ein solcher störender Einfluss durch einen Kurzschluss oder Verschmutzung an einer Elektrode verursacht werden.

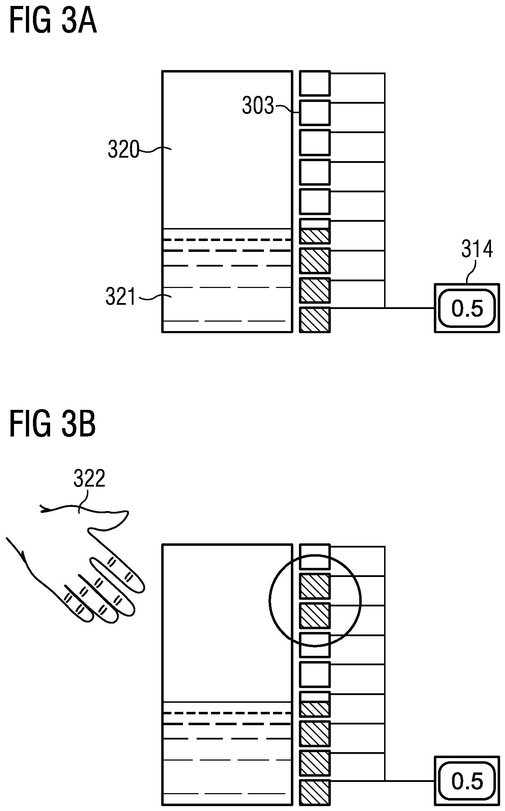

Fig. 3 zeigt, wie das erfindungsgemäße Verfahren den besagten Fehler verhindern kann. In Fig. 3 ist eine Messvorrichtung gezeigt, die aus mehreren Messelektroden 303 und einer Referenzelektrode (nicht gezeigt) besteht, und die in der Nähe eines mit einer Flüssigkeit 321 teilgefüllten Behälters 320 angeordnet ist. Da die Vorrichtung über mehr als eine Messelektrode 303 und damit über mehr als ein elektrisches Feld verfügt, können die Messwerte der einzelnen Messelektroden einer Plausibilitätsprüfung unterzogen werden. Hierbei wird erkannt, dass durch den störenden Einfluss der Nähe der Hand 322 einer Laborperson die von den oberen Messelektroden (Kreis in Fig. 3B) generierten Messwerte fehlerhaft sind, da sie keinen Füllwert darstellen können. Die Auswerteeinrichtung 314 ist in der Lage, dies zu erkennen und die betreffenden Messwerte zu ignorieren.

Auf diese Weise wird die Robustheit der Vorrichtung gegen äußere Einflüsse verstärkt.

Fig. 4 zeigt eine Messvorrichtung, die aus zehn Messelektroden 403 und einer Referenzelektrode (nicht gezeigt) besteht, und die in der Nähe eines mit einer Flüssigkeit 421 teilgefüllten Behälters 420 angeordnet ist. Fig. 4A zeigt die beabsichtigte Positionierung der Vorrichtung relativ zum Behälter 420. Die Vorrichtung soll vom Behälter 420 nur durch einen geringfügigen Luftspalt 423 getrennt sein. In diesem idealen Aufbau misst die Auswerteeinrichtung 414 einen Füllstand von 37 % bzw. von 0.37. Fig. 4B zeigt eine Positionierung der erfindungsgemäßen Vorrichtung relativ zum Behälter 420, die dazu führt, dass die Vorrichtung durch einen breiteren Luftspalt 423 von dem Behälter getrennt ist als beabsichtigt. Dies führt zu einer allgemeinen Verringerung aller absoluten Messwerte, so dass die unterste Messelektrode 407, die sich unterhalb des aktuellen Flüssigkeitsspiegels befindet und die damit eigentlich einen Vollausschlag (100 %) generieren sollte, ein kleineres Signal (beispielsweise 80 %) generiert.

Auch die zweite und die dritte Messelektroden von unten sind zu 100 % von Flüssigkeit bedeckt, zeigen aber nur einen Messwert von 80 % an. Die vierte Messelektrode 406 von unten ist zu 70 % bedeckt, zeigt aber nur einen Messwert von 56 % an. Die Auswertung der absoluten Messwerte würde zu einer falsch zu niedrigen Füllstandsbestimmung führen. Anhand einer der Messelektroden, die vollständig bedeckt sind, z.B. anhand von Messelektrode 407 kann jedoch ein Korrekturfaktor ermittelt werden, hier 80 %. Mit diesem Korrekturfaktor können nun alle Messwerte multipliziert werden. Auf diese Weise wird der Einfluss des Luftspalts eliminiert und der Füllstand wird korrekt bestimmt. Auf diese Weise können Störeinflüsse eliminiert werden, die sich gleichermaßen auf alle Messelektroden auswirken.

**BEZUGSZEICHENLISTE**

| | |
|---|---|
| Vorrichtung | 100 |
| Serielle Schnittstelle | 101 |
| Spannungsregler | 102 |
| Messelektrode | 103 - 112, 303, 403, 406, 407 |
| Referenzelektrode | 113 |
| Auswerteeinrichtung | 114, 214, 314, 414 |
| Sensor | 202 |
| Behälter | 220, 320, 420 |
| Flüssigkeit | 221, 321, 421 |
| Hand | 222, 322 |
| Luftspalt | 423 |

## Patentansprüche

1. Verfahren zur nicht-invasiven kapazitiven Messung des Füllstands eines Füllmediums in einem Behälter, wobei das Verfahren folgende Schritte umfasst:
a) Bereitstellen einer Vorrichtung (100) zur nicht-invasiven kapazitiven Füllstandsmessung eines Füllmediums in einem Behälter, besagte Vorrichtung aufweisend
I) mindestens zwei sich vertikal erstreckende Messelektroden (103-112), die horizontal übereinander angeordnet sind und eine Messfläche mit vertikaler Ausdehnung definieren, und
II) mindestens eine Referenzelektrode (113), die eine Referenzfläche mit vertikaler Ausdehnung definiert, wobei jede Messelektrode (103-112) zusammen mit der Referenzelektrode (113) jeweils einen Kondensator ausbildet, wodurch jeweils ein elektrisches Feld ausbildbar ist, wobei die vertikale Ausdehnung der Referenzfläche mindestens der vertikalen Ausdehnung der Messfläche entspricht, sowie Anordnen der Vorrichtung von außen an oder in unmittelbarer Nähe einer Außenwand des Behälters;
b) Messen der Kapazitäten der mindestens zwei Kondensatoren; und **gekennzeichnet dadurch, dass** das Verfahren den folgenden Schritt umfasst:
c) Validierung der Messwerte durch den Vergleich der Messwerte mit gespeicherten Kalibrierungswerten und der Messwerte untereinander,
wobei die gemessenen Kapazitäten durch eine Ratioermittlung zueinander in Beziehung gesetzt werden, **wobei** die Messwerte der mindestens zwei Messelektroden untereinander verglichen und zueinander in Beziehung gesetzt werden, und wobei anhand einer Messelektrode, die komplett mit dem Füllmedium bedeckt ist, ein Korrekturfaktor ermittelt wird, und alle Messwerte der anderen Messelektroden mit diesem Korrekturfaktor multipliziert werden.

2. Verfahren nach Anspruch 1, wobei eine Plausibilitätsprüfung durchgeführt wird.

3. Verfahren nach einem der Ansprüche 1 oder 2, wobei die Kapazitäten kontinuierlich gemessen werden.

4. Verfahren nach einem der vorhergehenden Ansprüche, wobei mindestens zwei Referenzelektroden die Referenzfläche definieren und wobei die Referenzelektroden horizontal übereinander angeordnet sind, wobei eine Messelektrode auf einer horizontalen Ebene mit einer Referenzelektrode auf derselben horizontalen Ebene jeweils einen Kondensator ausbildet.

5. Verfahren nach einem der vorhergehenden Ansprüche, wobei die Vorrichtung genau so viele Referenzelektroden aufweist wie Messelektroden, wobei jeder Messelektrode genau eine Referenzelektrode auf derselben horizontalen Ebene zugeordnet ist.

6. Verfahren nach einem der vorhergehenden Ansprüche, wobei die Messelektroden eine unterschiedliche Größe aufweisen.

7. Verfahren nach einem der vorhergehenden Ansprüche, wobei die Vorrichtung mindestens 3, bevorzugterweise mindestens 5, ganz besonders bevorzugt mindestens 10 Messelektroden aufweist.

8. Verfahren nach einem der vorhergehenden Ansprüche, wobei die Vorrichtung ferner eine Auswerteeinrichtung (114) umfasst.

9. Verfahren nach einem der vorhergehenden Ansprüche, wobei die Vorrichtung in Kontakt mit einem übergeordneten Steuersystem steht.

10. Verfahren nach einem der Ansprüche 1 bis 3 oder 6 bis 9, wobei die Vorrichtung ferner einen Behälter mit einer Behälterwand aufweist, wobei die Referenzelektrode durch einen Bereich der Behälterwand gebildet ist.

## Claims

1. Method for the non-invasive capacitive measurement of the filling level of a filling medium in a container, wherein the method comprises the following steps:
a) providing a device (100) for the non-invasive capacitive filling level measurement of a filling medium in a container, said device having
I) at least two vertically extending measurement electrodes (103-112), which are arranged horizontally one above another and define a measurement surface with a vertical extent, and II) at least one reference electrode (113), which defines a reference surface with a vertical extent, wherein each measurement electrode (103-112) together with the reference electrode (113) forms in each case one capacitor so that an electric field is able to be formed in each case, wherein the vertical extent of the reference surface corresponds at least to the vertical extent of the measurement surface, and arranging the device from the outside at or in the immediate vicinity of an external wall of the container;
b) measuring the capacitances of the at least two capacitors; and **characterized in that** the method comprises the following step:
c) validating the measurement values by comparing the measurement values with stored calibration values and the measurement values with one another,
wherein the measured capacitances are correlated with one another by ratio ascertainment, wherein the measurement values of the at least two measurement electrodes are compared with one another and are correlated with one another, and wherein a correction factor is ascertained on the basis of a measurement electrode that is covered entirely with the filling medium, and all the measurement values of the other measurement electrodes are multiplied by that correction factor.

2. Method according to Claim 1, wherein a plausibility check is carried out.

3. Method according to either of Claims 1 and 2, wherein the capacitances are measured continuously.

4. Method according to one of the preceding claims, wherein at least two reference electrodes define the reference surface and wherein the reference electrodes are arranged horizontally one above another, wherein a measurement electrode on a horizontal plane forms in each case one capacitor with a reference electrode on the same horizontal plane.

5. Method according to one of the preceding claims, wherein the device has exactly as many reference electrodes as measurement electrodes, wherein each measurement electrode is assigned exactly one reference electrode on the same horizontal plane.

6. Method according to one of the preceding claims, wherein the measurement electrodes have a different size.

7. Method according to one of the preceding claims, wherein the device has at least 3, preferably at least 5, with particular preference at least 10 measurement electrodes.

8. Method according to one of the preceding claims, wherein the device furthermore comprises an evaluation unit (114).

9. Method according to one of the preceding claims, wherein the device is in contact with a superordinate control system.

10. Method according to one of Claims 1 to 3 or 6 to 9, wherein the device furthermore has a container with a container wall, wherein the reference electrode is formed by a region of the container wall.

## Revendications

1. Procédé de mesure capacitive non invasive du niveau d'un fluide de remplissage dans un récipient, dans lequel le procédé comprend les stades suivants :
a) On se procure un système de mesure de niveau capacitive non invasive d'un fluide de remplissage dans un récipient, ledit système comportant
I) au moins deux électrodes (103 à 112) de mesure, qui s'étendent verticalement, qui sont disposées l'une sur l'autre horizontalement et qui définissent une surface de mesure ayant une étendue verticale, et
II) au moins une électrode (113) de référence, qui définit une surface de référence ayant une étendue verticale, chaque électrode (103, 112) de mesure formant ensemble avec l'électrode (113) de référence respectivement un condensateur, grâce à quoi respectivement un champ électrique peut être formé, l'étendue verticale de la surface de référence correspondant au moins à l'étendue verticale de la surface de mesure, ainsi que l'on met le système de l'extérieur sur ou à proximité immédiate d'une paroi extérieure du récipient ;
b) On mesure les capacités des au moins deux condensateurs **caractérisé en ce que** le procédé comprend le stade suivant :
c) La validation des valeurs de mesure par la comparaison des valeurs de mesure à des valeurs d'étalonnage mises en mémoire et à des valeurs de mesure entre elles,
dans lequel on met en relation, les unes avec les autres, les capacités mesurées par une détermination de rapport,
dans lequel on compare entre elles les valeurs de mesure des au moins deux électrodes de mesure et on les met en relation entre elles et dans lequel à l'aide d'une électrode de mesure, qui est complètement recouverte du fluide de remplissage, on détermine un facteur de correction et on multiplie toutes les valeurs de mesure des autres électrodes de mesure par ce facteur de correction.

2. Procédé suivant la revendication 1, dans lequel on effectue un contrôle de vraisemblance.

3. Procédé suivant la revendication 1 ou 2, dans lequel on mesure les capacités en continu.

4. Procédé suivant l'une des revendications précédentes, dans lequel au moins deux électrodes de référence définissent la surface de référence et dans lequel les électrodes de référence sont disposées l'une sur l'autre horizontalement, dans lequel une électrode de mesure sur un plan horizontal forme avec une électrode de référence sur le même plan horizontal respectivement un condensateur.

5. Procédé suivant l'une des revendications précédentes, dans lequel le système a exactement autant d'électrodes de référence que d'électrodes de mesure, chaque électrode de mesure étant associée exactement à une électrode de référence sur le même plan horizontal.

6. Procédé suivant l'une des revendications précédentes, dans lequel les électrodes de mesure ont une dimension différente.

7. Procédé suivant l'une des revendications précédentes, dans lequel le système a au moins 3, de préférence au moins 5, d'une manière tout à fait préférée au moins 10 électrodes de mesure.

8. Procédé suivant l'une des revendications précédentes, dans lequel le système comprend en outre un dispositif (114) d'exploitation.

9. Procédé suivant l'une des revendications précédentes, dans lequel le système est en contact avec un système de commande supérieur hiérarchiquement.

10. Procédé suivant l'une des revendications 1 à 3 ou 6 à 9, dans lequel le système a en outre un récipient ayant une paroi, l'électrode de référence étant formée par une partie de la paroi du récipient.
